# EUROPÄISCHE PATENTSCHRIFT

(11) **EP 1 559 325 B1**
(45) Veröffentlichungstag und Bekanntmachung des Hinweises auf die Patenterteilung: **25.05.2011**
(21) Anmeldenummer: 05000371.4
(22) Anmeldetag: 11.01.2005
(51) Int. Cl.: A23B 4/28, A23B 4/26, A23B 4/02, E21B 21/06, A01J 25/00

(54) **Lakebehälter mit Filtersystem**
Brine container with filtering device
Récipient à saumure avec système de filtration

(30) Priorität: 28.01.2004 DE 102004004121
(43) Veröffentlichungstag der Anmeldung: 03.08.2005
(73) Patentinhaber: Schröder Maschinenbau KG, 33824 Werther (DE)
(72) Erfinder: Heidbreder, Eric, 33824 Werther (DE); Umbach, Christoph, 33824 Werther (DE)
(74) Vertreter: TER MEER - STEINMEISTER & PARTNER GbR

(56) Entgegenhaltungen:
- EP-A- 0 164 225
- EP-A- 0 584 875
- GB-A- 199 663
- GB-A- 395 508
- GB-A- 862 307
- GB-A- 1 525 968
- US-A- 4 815 368
- US-A- 6 004 464
- US-B1- 6 451 270
- PATENT ABSTRACTS OF JAPAN Bd. 1996, Nr. 05, 31. Mai 1996 (1996-05-31) -& JP 08 000239 A (KOMINE KIKAI KK), 9. Januar 1996 (1996-01-09)
- DATABASE WPI Section Ch, Week 197825 Derwent Publications Ltd., London, GB; Class D12, AN 1978-45304A XP002323513 -& SU 568 429 A (FISHING IND MECHANI) 9. November 1977 (1977-11-09)
- DATABASE WPI Section Ch, Week 199210 Derwent Publications Ltd., London, GB; Class D12, AN 1992-077561 XP002323514 -& PT 94 747 A (CERLEI-SERRALHARIA) 31. Januar 1992 (1992-01-31)
- DATABASE WPI Section PQ, Week 199707 Derwent Publications Ltd., London, GB; Class P28, AN 1997-075728 XP002323515 & RU 2 060 027 C1 (VERLIN A A) 20. Mai 1996 (1996-05-20)
- DATABASE WPI Section Ch, Week 199330 Derwent Publications Ltd., London, GB; Class M24, AN 1993-241700 XP002323516 -& SU 1 752 785 A1 (KHARK BRANCH ELEC THERMAL EQUIP DES INST) 7. August 1992 (1992-08-07)

## Beschreibung

Die Erfindung betrifft einen Lakebehälter, an dem ein Ansaugfilter angeordnet ist.

Es kann sich beispielsweise um einen Lakebehälter für Pökellake handeln, die durch den Ansaugfilter abgepumpt und einer Pökelmaschine zugeführt wird. Üblicherweise wird von der Pökelmaschine abfließende Pökellake über einen Grobfilter in den Lakebehälter zurückgeführt. Der Ansaugfilter dient dazu, die Lakepumpe zu schützen und ein Verstopfen von Injektionsnadeln der Pökelmaschine durch eingebrachte Partikel oder Verunreinigungen zu verhindern. Der Ansaugfilter wird durch die von ihm aus der Pökellake gefilterten Partikel mit der Zeit verstopft und kann beispielsweise von Hand zur Reinigung entnommen werden.

Es ist bekannt, zwischen dem Grobfilter und dem Ansaugfilter im Lakebehälter zusätzliche Filter vorzusehen, um ein schnelles Verstopfen des Ansaugfilters zu vermeiden. Üblicherweise wird dazu ein Schiebefilter von oben in den Lakebehälter eingeschoben, so daß dieser in zwei Bereiche mit unterschiedlichem Verschmutzungsgrad der Lake unterteilt wird. Der Schiebefilter verschmutzt allmählich und muß regelmäßig zur Reinigung entnommen werden. Auch bei der Verwendung mehrerer solcher Schiebefilter kann beim Entfernen eines Filters zur Reinigung Lake mit höherem Verschmutzungsgrad in einen Bereich von Lake mit geringerem Verschmutzungsgrad eingebracht werden.

GB 1 525 968 beschreibt eine Anlage zur Reinigung von Lake, bei der verschmutzte, zurücklaufende Lake aus einem Sammeltank durch einen Filterkopf entnommen wird, mittels Ultraviolettbestrahlung behandelt wird und einem zweiten Tank zugeführt wird, aus dem sie über einen weiteren Filter entnommen und Injektionsnadeln zugeführt wird.

JP 08 000 239 beschreibt eine Anlage zur Sterilisierung und Desinfektion von Lebensmitteln mittels einer sterilisierenden Flüssigkeit. Die Flüssigkeit wird aus einem Sterilisationstank abgepumpt und über eine Wiederaufbereitungsanlage mit Filtern zu Austrittsöffnungen in den Tank zurückgepumpt.

Aus SU 568429 A (WPI Datenbank XP-002323513) ist ein Umwälzfiltersystem für Salzlake für die Fischindustrie bekannt. Ein kontinuierlicher Prozeß wird sichergestellt, indem in einem Filterbehälter oberhalb der Filter ein Überlauf vorgesehen ist.

Aufgabe der Erfindung ist es, einen Lakebehälter der eingangs genannten Art zu schaffen, bei dem der Ansaugfilter dauerhaft und zuverlässig entlastet wird.

Diese Aufgabe wird erfindungsgemäß durch einen Lakebehälter nach Anspruch 1 gelöst.

Die Lake kann so ständig durch das Umwälz-Filtersystem gepumpt und dabei gefiltert werden. Auf diese Weise werden Verunreinigungen aus der Lake ausgetragen. Durch das Umwälz-Filtersystem können daher wirkungsvoll und in großem Ausmaß Schmutzpartikel dem Kreislauf der Lake entnommen werden, so daß der Ansaugfilter entlastet ist und nur noch deutlich langsamer verschmutzt. Während eines Wechsels des Filterelements kann weiterhin Lake aus dem Lakebehälter über den Ansaugfilter entnommen werden, so daß beispielsweise eine Pökelmaschine im Dauerbetrieb arbeiten kann. Dies ist besonders vorteilhaft, da so ohne eine Unterbrechung während der Produktion das Filterelement gewechselt oder entnommen und gereinigt werden kann.

Der Lakebehälter weist einen Rücklaufbereich und einen davon durch den Trennfilter getrennten Ansaugbereich auf, wobei der Ansaugfilter im Ansaugbereich angeordnet ist und die Lake mit der Pumpe des Umwälz-Filtersystems von dem Rücklaufbereich in den Ansaugbereich pumpbar ist. Ein besonderer Vorteil ist dabei, daß der Ansaugbereich mit Lake versorgt wird, die durch das Filtersystem gefiltert wurde. Dadurch ergibt sich im Ansaugbereich des Lakebehälters ein geringerer Verschmutzungsgrad als im Rücklaufbereich des Lakebehälters. Aufgrund des geringeren Verschmutzungsgrades ist der Ansaugfilter deutlich entlastet und verschmutzt allenfalls noch sehr langsam. Zum Auswechseln des Filterelements ist bevorzugt der Zulauf zum Filter absperrbar, so daß der Filter oder das Filterelement entnommen werden kann, ohne daß ungefilterte Lake in den Ansaugbereich gepumpt wird. Alternativ könnte zum Auswechseln des Filterelements auch die Pumpe abschaltbar sein. Vorteilhaft ist in beiden Fällen, daß bei einem Wechsel des Filterelements keine ungefilterte Lake in den Ansaugbereich gelangt. Der Ansaugfilter kann so im Dauerbetrieb noch wirksamer entlastet werden.

Der Rücklaufbereich und der Ansaugbereich sind durch den Trennfilter verbunden. Bei dem Trennfilter kann es sich beispielsweise um ein Blech mit Schlitzen oder anderen Öffnungen handeln. Der Trennfilter läßt einen Laketransfer zwischen dem Rücklaufbereich und dem Ansaugbereich des Lakebehälters zu und bewirkt so einen Niveauausgleich in den beiden Bereichen. Da je nach Leistung der Pumpe des Filtersystems kaum Lake durch den Trennfilter strömt oder die Lake im wesentlichen vom Ansaugbereich in den Rücklaufbereich zurückströmt, verschmutzt der Trennfilter kaum. Eine gewisse, von der Pumpe des Filtersystems verursachte Strömung im Lakebehälter ist vorteilhaft, um die Lake in Bewegung zu halten, so daß sich weniger Feststoffe am Boden absetzen.

Vorteilhafte Ausgestaltungen der Erfindung ergeben sich aus den Unteransprüchen.

In einer bevorzugten Ausführungsform weist das Filtersystem mindestens zwei Filter auf, deren Zulaufseiten mittels einer Umschalteinrichtung absperrbar sind. In diesem Fall kann mittels der Umschalteinrichtung beispielsweise der Zulauf eines Filters gesperrt werden, dessen Filterelement ausgewechselt werden soll. Es ist auch denkbar, mit der Umschalteinrichtung jeweils einen Filter solange zu betreiben, bis er gewechselt werden soll, und dann erst auf den anderen Filter umzuschalten. Je nach Anordnung und Aufbau des Filtersystems können vorzugsweise zusätzlich die Ablaufseiten der Filter absperrbar sein.

Vorzugsweise weist das Filtersystem eine Druckmeßeinrichtung zur Differenzdruckmessung vor und hinter dem Filter auf. Diese kann beispielsweise an eine Überwachungseinrichtung für den Differenzdruck angeschlossen sein, welche beim Überschreiten eines Grenzwertes ein Signal ausgibt. Wird beispielsweise der Differenzdruck aufgrund der Verschmutzung des Filters zu groß, so kann eine Anzeige erfolgen, die auf den nötigen Wechsel des Filters hinweist. Dadurch entfällt die Notwendigkeit einer optischen Kontrolle der Filter.

Bei mehreren Filtern, die über die Umschalteinrichtung umschaltbar sind, kann beim Überschreiten eines Grenzwertes des Differenzdrucks auch eine automatische Umschaltung des durchströmten Filters erfolgen. Auf diese Weise kann bei einem vollen Filter automatisch auf den nächsten Filter umgeschaltet werden, so daß dieser verwendet wird und der volle Filter währenddessen ausgewechselt werden kann.

Anstelle der Messung des Differenzdrucks vor und hinter dem Filter oder zusätzlich kann auch eine Messung der Leistungsaufnahme der Pumpe des Filtersystems erfolgen.

Im folgenden werden Ausführungsbeispiele der Erfindung anhand der Zeichnung näher erläutert.

Die einzige Figur zeigt einen Lakebehälter mit einem Filtersystem.

Die Figur zeigt einen Lakebehälter mit einem Rücklaufbereich 10 und einem Ansaugbereich 12, die durch einen in den Lakebehälter eingesetzten Trennfilter 14 voneinander getrennt sind. Der Trennfilter 14 weist in seinem oberen Bereich eine Wand 16 auf, mit der er über die Flüssigkeitsoberfläche 18 hinausragt. Der Lakebehälter gehört beispielsweise zu einer Pökelmaschine, die mittels einer Pumpe über eine Ansaugleitung 20 mit Pökellake 22, die über einen Ansaugfilter 24 angesaugt wird, versorgt wird. Der Ansaugfilter 24 bewirkt beispielsweise eine feinere Filterung als der Trennfilter 14.

Von der Pökelmaschine abfließende Lake wird über einen Grobfilter 26 in den Rücklaufbereich 10 zurückgeführt. Die sich im Rücklaufbereich 10 befindende Lake weist nach der Grobfilterung immer noch einen gewissen Verschmutzungsgrad auf. Der Rücklaufbereich 10 und der Ansaugbereich 12 sind durch ein symbolisch dargestelltes Umwälz-Filtersystem 28 verbunden, das im folgenden näher erläutert wird.

Das Filtersystem 28 weist eine Pumpe 30 auf, die jeweils über Ventile 32 an Filter 34 angeschlossen ist. Die von den Filtern 34 gefilterte Lake wird über eine Leitung 36 in den Ansaugbereich 12 geführt.

Bei den Filtern 34 handelt es sich jeweils beispielsweise um auswechselbare Filterpatronen, die von der Lake von innen nach außen durchströmt werden und eine Feinfilterung der Lake bewirken. In der Lake enthaltene Verunreinigungen sammeln sich im Inneren von Filtereinsätzen 38 der Filter an. Ein voller Filter kann nach Schließen des entsprechenden Ventils 32 aus dem Filtersystem entnommen werden und gereinigt oder durch einen neuen Filter ersetzt werden. Je nach Art der Lake können verschiedene Filtereinsätze 38 verwendet werden. Es können wahlweise auch lediglich die Filtereinsätze 38 entnehmbar sein.

Die Ventile 32 sind beispielsweise so miteinander verbunden, daß sie eine Umschalteinrichtung bilden, die den Zulauf jeweils zu einem der beiden Filter 34 öffnet. Auf diese Weise kann ein Filter 34 so lange verwendet werden, bis er voll ist. Der jeweils andere Filter 34 steht dann zur Verwendung bereit, so daß ein voller Filtereinsatz 38 im laufenden Betrieb entnommen und gereinigt werden kann.

Vor und hinter den Filtern ist jeweils eine Druckmeßeinrichtung 40 angeordnet. Die Druckmeßeinrichtungen 40 sind an eine Überwachungseinrichtung 42 angeschlossen, die den Differenzdruck vor und hinter den Filtern überwacht. Bei Überschreitung eines Grenzwertes, wie es beispielsweise bei einem vollen Filter 34 auftreten kann, gibt die Überwachungseinrichtung 42 ein optisches und/oder akustisches Signal aus. Die Druckmeßeinrichtungen 40 oder die Überwachungseinrichtung 42 können außerdem an eine Anzeige des Verschmutzungsgrades angeschlossen sein.

Das Filtersystem 28 ist beispielsweise als Baugruppe neben dem Lakebehälter montierbar. Die Filter 34 sind stehend neben dem Becken des Lakebehälters angeordnet. Die Filtereinsätze 38 können nach oben aus dem Filtern 34 durch entsprechende Öffnungen entnommen werden. Diese Öffnungen liegen dabei oberhalb der Flüssigkeitsoberfläche 18, so daß keine Lake 22 aus dem Ansaugbereich 12 ausläuft. Die Filter 34 sind jedoch so angeordnet, daß bei einer Entnahme eines Filtereinsatzes 38 eine versehentliche Verschmutzung des Beckens des Lakebehälters vermieden wird.

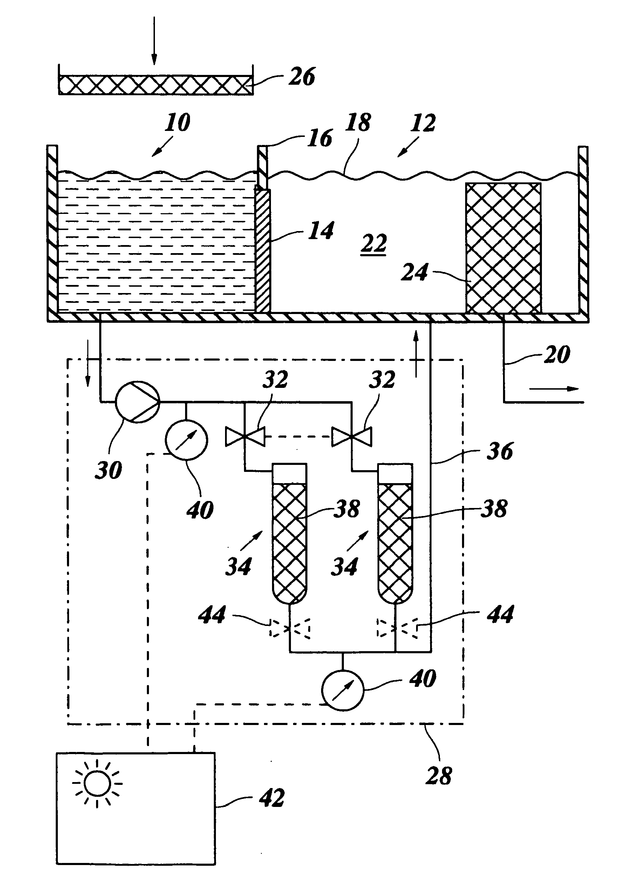

Wahlweise können die Filter 34 jedoch auch liegend angeordnet sein, und sie können auch vollständig unterhalb der Flüssigkeitsoberfläche 18, jedoch außerhalb des Beckens des Lakebehälters, angeordnet sein. In diesem Fall sind weitere Ventile 44 auf der Ablaufseite der Filter 34 vorzusehen, um ein Auslaufen der Lake 22 beim Wechseln eines Filters zu verhindern. Diese Ventile 44 sind in Figur 4 gestrichelt dargestellt.

Durch den Zustrom von Lake über die Leitung 36 in den Ansaugbereich 12 ergibt sich beispielsweise eine geringfügige Strömung von dem Ansaugbereich 12 durch den Trennfilter 14 in den Rücklaufbereich 10. Der Trennfilter 14 verschmutzt daher kaum, und außerdem bewirkt diese Strömung eine gewisse Umwälzung der Lake im Becken.

Anstelle der beiden Druckmeßeinrichtungen 40 kann eine Differenzdruckmeßeinrichtung vorgesehen sein, die direkt die Differenz des Druckes vor und hinter den Filtern 34 mißt. Sie steht wiederum mit der Überwachungseinrichtung 42 in Verbindung, die bei Überschreiten eines Grenzwertes ein optisches und/oder akustisches Signal ausgibt. In diesem Beispiel gibt sie außerdem ein Signal aus, mit dem beim Überschreiten eines Grenzwertes eine automatische Umschaltung der Filter 34 über die Ventile 32 bewirkt wird.

Der beschriebene Aufbau des Filtersystems ist lediglich als Beispiel angegeben. So ist es etwa bei den genannten Ausführungsbeispielen denkbar, daß anstelle der verbundenen Ventile 32 ein Umschaltventil vorgesehen ist, über das je nach Einstellung des Umschaltventils die Zulaufseite des einen oder des anderen Filters 34 mit der Pumpe 30 verbunden ist. Auch die Ventile 44 können verbunden sein oder durch ein Umschaltventil ersetzt werden. Die Pumpe kann wahlweise auch in der Leitung 36 angeordnet sein.

## Patentansprüche

1. Lakebehälter, der ein Umwälz-Filtersystem (28) aufweist, welches einen Filter (34) und eine Pumpe (30) aufweist, mit der die Lake (22) durch das Umwälz-Filtersystem (28) hindurch von einem Rücklaufbereich (10) des Lakebehälters in einen Ansaugbereich (12) des Lakebehälters pumpbar ist, wobei der Filter (34) ein auswechselbares Filterelement aufweist und wobei der Ansaugbereich (12) von dem Rücklaufbereich (10) durch einen für die Lake (22) durchlässigen Trennfilter (14) getrennt ist, der den Rücklaufbereich (10) und den Ansaugbereich (12) verbindet, wobei ein Ansaugfilter (24) im Ansaugbereich (12) angeordnet ist.

2. Lakebehälter nach Anspruch 1, **dadurch gekennzeichnet, daß** das Umwälz-Filtersystem (28) mindestens zwei Filter (34) aufweist, deren Zulaufseiten mittels einer Umschalteinrichtung absperrbar sind.

3. Lakebehälter nach einem der vorstehenden Ansprüche, **dadurch gekennzeichnet, daß** das Umwälz-Filtersystem (28) eine Druckmeßeinrichtung (40) zur Differenzdruckmessung vor und hinter dem Filter (34) aufweist.

4. Lakebehälter nach Anspruch 3, **gekennzeichnet durch** eine Überwachungseinrichtung (42) für den Differenzdruck vor und hinter dem Filter (34), die dazu ausgebildet ist, beim Überschreiten eines Grenzwertes ein Signal auszugeben.

## Claims

1. Brine container, comprising a circulating filter system (28), which comprises a filter (34) and a pump (30), with which the brine (22) can be pumped through the circulating filter system (28) from a recycling region (10) of the brine container into a suction region (12) of the brine container, wherein the filter (34) comprises an exchangeable filter element, and wherein the suction region (12) is separated from the recycling region (10) by a separation filter (14) which is permeable to the brine (22) and which connects the recycling region (10) and the suction region (12), wherein a suction filter (24) is disposed in the suction region (12).

2. Brine container according to claim 1, **characterized in that** the circulating filter system (28) comprises at least two filters (34), the inflow sides of which can be shut off by means of a switching device.

3. Brine container according to one of the preceding claims, **characterized in that** the circulating filter system (28) comprises a pressure-measuring device (40) for measuring the difference in pressure in front of and behind the filter (34).

4. Brine container according to claim 3, **characterized by** a monitoring device (42) for monitoring the difference in pressure in front of and behind the filter (34), which is adapted to emit a signal when a limiting value is exceeded.

## Revendications

1. Récipient à saumure comportant un système de filtration par circulation (28), lequel système inclut un filtre (34) et une pompe (30) au moyen de laquelle la saumure (22) peut être pompée à travers le système de filtration par circulation (28) à partir d'une zone de recyclage (10) du récipient à saumure dans une zone d'aspiration (12) du récipient à saumure, le filtre (34) comportant un élément filtrant échangeable, et la zone d'aspiration (12) étant séparée de la zone de recyclage (12) par un filtre de séparation (14) perméable à la saumure (22), ledit filtre reliant la zone de recyclage (10) et la zone d'aspiration (12), un filtre d'aspiration (24) étant agencé dans la zone d'aspiration (12).

2. Récipient à saumure selon la revendication 1, **caractérisé en ce que** le système de filtration par circulation (28) comporte au moins deux filtres (34) dont des côtés d'alimentation peuvent être bloqués au moyen d'un dispositif de commutation.

3. Récipient à saumure selon l'une quelconque des revendications précédentes, **caractérisé en ce que** le système de filtration par circulation (28) comporte un dispositif de mesure de pression (40) pour mesurer une différence de pression devant et derrière le filtre (34).

4. Récipient à saumure selon la revendication 3, **caractérisé par** un dispositif de surveillance (42) pour la différence de pression devant et derrière le filtre (34), ledit dispositif étant configuré pour émettre un signal lorsqu'une valeur limite est dépassée.
